# EUROPEAN PATENT SPECIFICATION

(11) **EP 2 128 475 B1**
(45) Date of publication and mention of the grant of the patent: **22.09.2010**
(21) Application number: 09153727.4
(22) Date of filing: 26.02.2009
(51) Int. Cl.: F16D 65/095, F16D 55/228

(54) **Caliper for a disc brake**
Sattel für eine Scheibenbremse
Étrier pour frein à disque

(30) Priority: 22.05.2008 IT BS20080107
(43) Date of publication of application: 02.12.2009
(73) Proprietor: Freni Brembo S.p.A., 24035 Curno (Bergamo) (IT)
(72) Inventor: Gotti, Antonio, 24030, Almenno San Bartolomeo BERGAMO (IT); Pagni, Marco, 20065, Inzago MILANO (IT)
(74) Representative: Mitola, Marco

(56) References cited:
- JP-A- 2005 121 174
- US-A- 3 882 972
- US-A- 4 392 559
- US-B1- 6 260 670

## Description

The present invention relates to a caliper for a disc brake; as for instance disclosed in US-B-6 260 670.

Specifically, calipers for disc brakes exert their braking action on the brake disc by means of pads comprising a plate and friction material. Support of the pads by means of support pins protruding from the half bodies of the caliper towards the associable pads and inserted in special support holes made on the plates of the pads are known of. In some types of calipers, the support pins have the function of guiding and positioning the pads, as well as reacting to the braking force.

The support pins known in the art have several drawbacks and limitations. Specifically, to ensure the necessary rigidity of the attachment they require expensive solutions, complicated to produce and/or to mount.

The problem which the present invention sets out to overcome is to resolve the drawbacks and limitations mentioned with reference to the known technique.

Such drawbacks and limitations are resolved by a caliper for a disc brake according to claim 1.

Other embodiments of the invention are described in the subsequent claims.

Further characteristics and advantages of the present invention will prove more comprehensible from the description below of its preferred, non-limiting examples of embodiment, wherein:

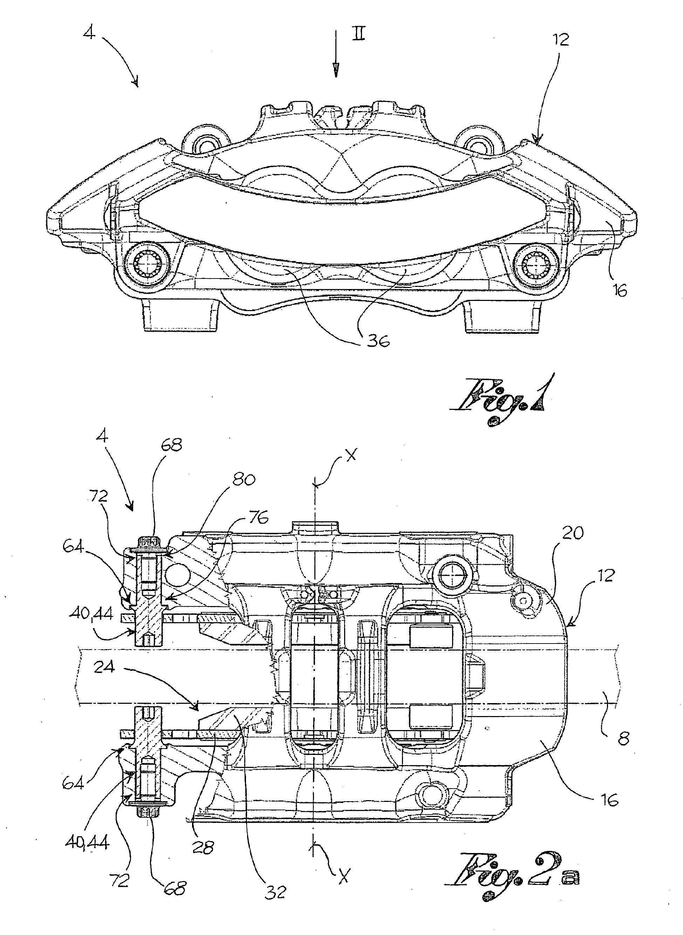

figure 1 shows a lateral view of a caliper for a disc brake according to one embodiment of the present invention;

figure 2a shows a partial, cross-section view of the caliper in figure 1, from the side of the arrow II in figure 1;

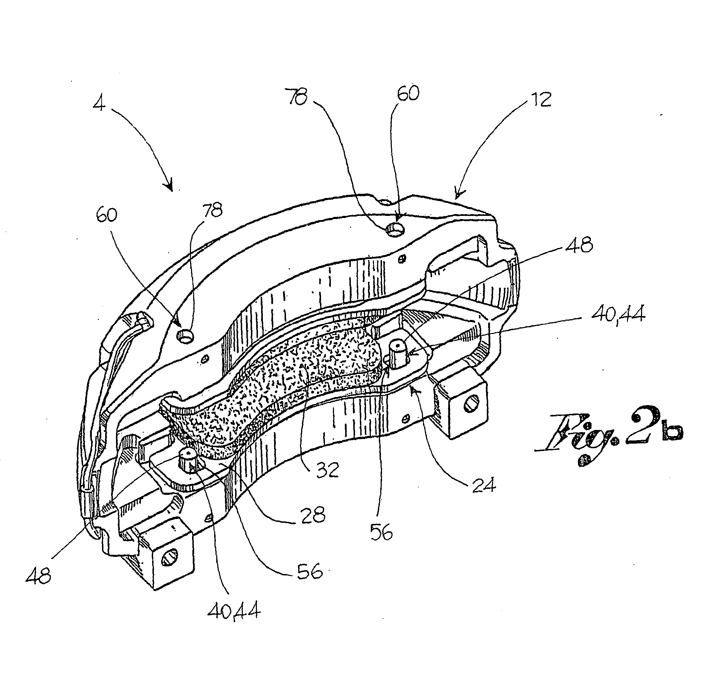

figure 2b shows a perspective view of a caliper for a disc brake according to one embodiment of the present invention;

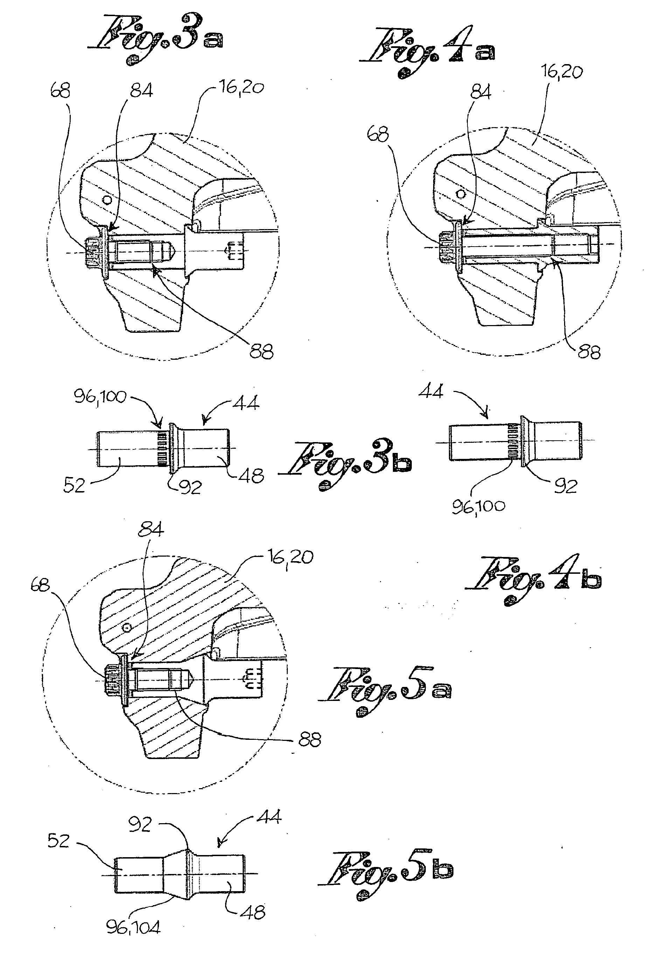

figures 3a,3b show details of the caliper in figure 1, according to a possible embodiment;

figures 4a,4b show details of the caliper in figure 1, according to a further embodiment;

figures 5a,5b show details of the caliper in figure 1, according to a further embodiment;

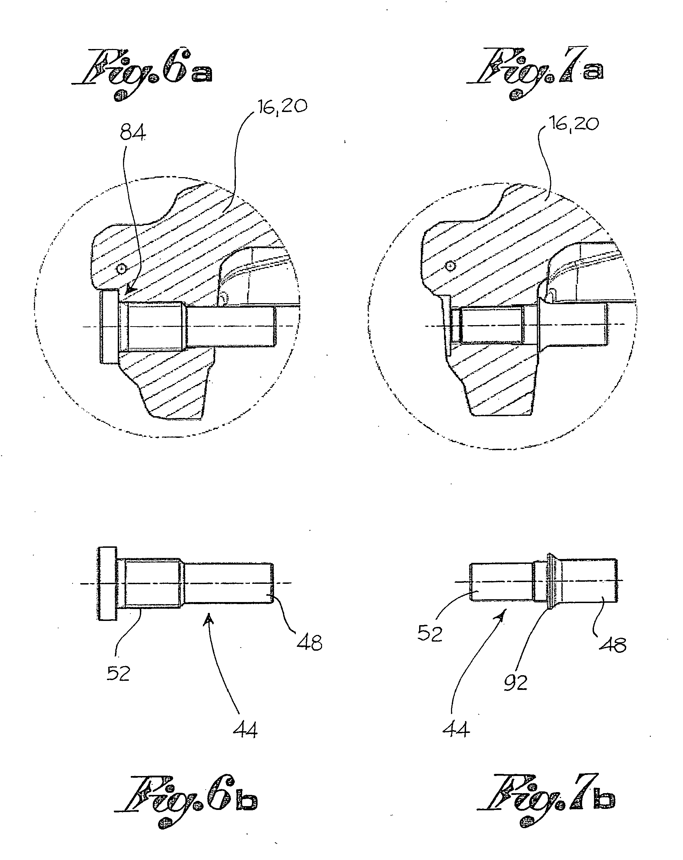

figures 6a,6b show details of the caliper in figure 1, according to a further embodiment;

figures 7a, 7b show details of the caliper in figure 1, according to a further embodiment.

The elements or parts of elements common to the embodiments described below will be indicated using the same reference numeral.

With reference to the aforesaid figures, reference numeral 4 globally denotes a caliper for a disc brake associable to a brake disc 8.

The brake caliper 4 comprises a caliper body 12 positioned astride the brake disc 8, the caliper body 12 comprising a first and a second half-body 16,20 facing each other and positioned on opposite sides to the brake disc 8.

The two half-bodies 16,20 may be joined to each other by threaded connections, or the caliper body may be made in a single piece.

The brake caliper 4 comprises at least one pad 24 lodged in a compartment defined between each half-body 16,20 and the associable brake disc 8. The pad 24 comprises a support plate 28 and a friction portion 32 directly facing the brake disc 8. The caliper comprises drive components 36, in themselves known and therefore not further described, able to influence the pad 24 on the side of the support plate 28 so as to press the friction portion 32 against the brake disc 8 in an axial direction X-X.

Preferably, the brake caliper 4 comprises means of support 40 of the pad 24, able to hold the pad 24 between the relative half-body 16,20 and the brake disc 8 and to allow shifting of the pad 24 under the thrust effect of the drive components 36.

According to one embodiment, the means of support 40 comprise at least one pin 44 which protrudes from at least one half-body 16,20 towards the brake disc 8, the pin 44 having a support portion 48 and an attachment portion 52.

The support portion being able to co-operate with a hole or slot 56 of the support plate 28 to support the pad 24; the attachment portion 52 allowing the attachment of the pin 44 to a half-body 16,20 of the caliper body 12.

The caliper comprises at least one support hole 60 for the pin 44 which comes out in a first access aperture 64 facing the associable pad 24 for the insertion of the pin 44 from the side of the pad itself, and at least one screw 68 partially inserted in said support hole 60, in which the screw 68 engages the attachment portion 52 of the pin 44 at least partially to attach the pin 44 to the relative half-body 16,20.

Advantageously, the attachment portion 52 of the pin 44 is lodged inside the support hole 60 of the half- body 16,20 and the support portion 48 reaches its final position against the half-body 16,20 at the first access aperture 64 of the support hole 60, from the side of the associable pad 24.

According to one embodiment, the support hole 60 of the half-body 16,20 passes through the half-body 16,20 so as to identify on the half-body 16,20 a second access aperture 72, separate from the first access aperture 64, so as to enable the insertion of the pin 44 and of the screw 68 through the first and the second access apertures 64,72 respectively.

The support hole 60 comprises a first and a second section, 76,80 which come out respectively in the first and second access apertures 64,72; the first and second sections 76,80 are incident to each other, that is they intercept to form a cavity passing through the half-body 16,20.

According to one embodiment, the first and second sections 76,80 are parallel so as to identify a cylindrical support hole 60 having a rectilinear axis to permit mounting of the screw 68 and of the pin 44 co-axially to each other.

Preferably, the first and second sections are positioned parallel to the X-X axis so as to form a cylindrical support hole 60 directed axially.

According to a further possible embodiment, the first and second sections 76,80 are orthogonal to each other so as to permit mounting of the pin 44 in an axial direction and of the screw 68 in any direction contained in a plane perpendicular to the axial direction X-X, such as for instance a radial or tangential direction. Radial direction is taken to mean a direction perpendicular to the axial direction X-X and incident with the rotation axis of an associable brake disc; tangential direction is taken to mean a direction orthogonal to the axial direction and to the radial direction.

The support hole 60, at the point of the second access aperture 72, has a ledge 84 to stop the head of said screw 68; the ledge 84 is for instance made by flattening.

According to one embodiment, the attachment portion 52 of the pin 44 comprises a threaded seat 88 open on the side opposite the support portion, that is towards the second access aperture 72, so as to permit the insertion and screwing of the screw 68 inside the attachment portion 52.

Preferably, said seat 88 extends axially in the attachment portion 52 without intercepting the support portion 48 which has a solid cross section.

According to one embodiment the pin 44, at the transition portion between the attachment portion 52 and the support portion 48, comprises a collar 92 able to reach its final position against the half-body 16,20 at the first access aperture 64, so as to cause an arrest of the insertion of the pin 44 in the support hole 60, from the side of the first access aperture 64. In other words, thanks to the collar 92, positioned at the transition portion, the attachment portion 52 is entirely lodged in the support hole 60, while the support portion 48 completely overhangs the half-body 16,20 on the side of the first access aperture 64.

According to one possible embodiment of the present invention, the attachment portion 52 comprises anti-rotation mechanisms 96 of the pin 44 able to prevent the accidental rotation of the pin 44 in relation to its relative support hole 60.

According to one embodiment, the anti-rotation mechanisms 96 are positioned on the outer lateral wall of the attachment portion 52 which interfaces with the inner lateral wall of the support hole 60.

For instance, the anti-rotation mechanisms 96 comprise a knurl 100 which by exerting a frictional effect on the inner wall of the support hole 60 prevents rotation of the pin 44.

According to a further embodiment, the anti-rotation mechanisms 96 comprise a conical section 104 diverging towards the support portion 48 and the associable pad 24. The conical section 104 exerts a frictional effect on the inner lateral wall of the support hole 60, opposing rotation of the pin 44.

For instance, the conical section 104 is joined to the collar 92 of the support portion 48 of the pin 44, the collar 92 terminating against the first access aperture 64.

As may be seen from the description, the caliper according to the invention makes it possible to overcome the drawbacks and limitations present in the known art.

Specifically, the support pins for the pads have an easy and secure attachment.

The assembly of said pins does not require the interposition of bushings between the pin and the plates of the associable pads.

The attachment portions of the pins are fitted in a tensional state of traction which stiffens the caliper body and ensures sufficient rigidity of the pin itself.

The anti-rotation mechanisms protect the pins from any loosening, rotation and/or unscrewing due to the vibrations transmitted by the pads

## Claims

1. Caliper for a disc brake (4) associable to a brake disc (8), comprising
- a caliper body (12) positioned astride said brake disc (8), wherein the caliper body (12) comprises a first and second half-body (16,20) facing each other and positioned on opposite sides of the brake disc (8),
- at least one pad (24) lodged in a compartment defined by each half-body (16,20) and the associable brake disc (8), the pad (24) comprising a support plate (28) and a friction portion (32) directly facing the brake disc (8),
- drive components (36) able to influence the pad (24) on the side of the support plate (28) so as to press the friction portion (32) against the brake disc (8) in an axial direction (X-X),
- means of support (40) for the pad (24), able to hold the pad (24) between the relative half-body (16,20) and the brake disc (8) and allow the shifting of the pad (24) under the thrust effect of the drive components (36), wherein said means of support (40) comprise
- at least one pin (44) overhanging at least one half-body (16,20) towards the brake disc (8), the pin (44) having a support portion (48) and an attachment portion (52), the support portion (48) being able to co-operate with a hole or slot (56) of the support plate (28) to support the pad (24),
- the caliper (4) comprising at least one support hole (60) for the pin (44) which comes out in a first access aperture (64) facing towards the associable pad (24) for the insertion of the pin (44), and at least one screw (68) partially inserted in said support hole (60) of the half-body (16,20), wherein the screw (68) engages the attachment portion (52) of the pin (44) at least partially to attach the pin (44) to the half-body (16,20),
**characterised in that**
the attachment portion (52) of the pin (44) is lodged inside the support hole (60) of the half-body (16,20) and the support portion (48) reaches its final position against the half-body (16,20) at the first access aperture (64) of the support hole (60) on the side of the associable pad (24).

2. Caliper (4) according to claim 1, wherein said support hole (60) of the half-body (16,20) passes through the half-body (16,20) so as to identify on the half-body (16,20) a second access aperture (72), separate from the first access aperture (64), and allow the insertion of the pin (44) and of the screw (68) through the first and second access apertures (64,72) respectively.

3. Caliper (4) according to claim 1 or 2, wherein the support hole (60) comprises a first and a second section (76,80) which come out in said first and second access apertures (64,72), said first and second sections (76,80) being incident to each other.

4. Caliper (4) according to claim 3, wherein said first and second sections (76,80) are parallel so as to identify a cylindrical support hole (60) having a rectilinear axis to permit the mounting of the screw (68) and of the pin (44) co-axially to each other.

5. Caliper (4) according to claim 3 or 4, wherein said first and second sections (76,80) are positioned parallel to the axial direction (X-X).

6. Caliper (4) according to claim 3, wherein said first and second sections (76,80) are orthogonal to each other.

7. Caliper (4) according to any of the claims from 2 to 6, wherein the support hole (60) has a ledge (84) at the second access aperture (72) to stop the insertion of said screw (68).

8. Caliper (4) according to claim 7, wherein said ledge (84) is made by flattening of the relative half-body (16,20), on the side opposite the associable pad (24).

9. Caliper (4) according to any of the previous claims, wherein the attachment portion (52) of the pin (44) comprises a threaded seat (88) open on the side opposite the support portion (48) so as to permit the insertion and screwing of the screw (68) inside the attachment portion (52).

10. Caliper (4) according to claim 9, wherein the threaded seat (88) extends axially in the attachment portion (52) without intercepting the support portion (48) which has a solid cross-section.

11. Caliper (4) according to any of the previous claims, wherein the pin (44) at a transition portion between the attachment portion (52) and the support portion (48), comprises a collar (92) able to reach its final position against the half-body (16,20) at the first access aperture (64), so as to cause an arrest in the insertion of the pin (44) in the support hole (60), from the side of the first access aperture (64).

12. Caliper (4) according to any of the previous claims, wherein said attachment portion (52) comprises anti-rotation mechanisms (96) for the pin (44).

13. Caliper (4) according to claim 12, wherein the anti-rotation mechanisms (96) are positioned on an outer lateral wall of the attachment portion (52).

14. Caliper (4) according to claim 12 or 13, wherein the anti-rotation mechanisms (96) comprise a knurl (100).

15. Caliper (4) according to claim 12, 13 or 14, wherein the anti-rotation mechanisms (96) comprise a conical section (104) diverging towards the associable pad (24), said conical section (104) being connected to a collar (92) of the support portion (48) of the pin (44), the collar (92) terminating against the first access aperture (64).

## Patentansprüche

1. Sattel für eine Scheibenbremse (4), der mit einer Bremsscheibe (8) verbindbar ist, umfassend:
- einen rittlings auf der Bremsscheibe (8) positionierten Sattelkörper (12), wobei der Sattelkörper (12) einen ersten und einen zweiten Halbkörper (16, 20) umfasst, die einander zugewandt sind und auf gegenüberliegenden Seiten der Bremsscheibe (8) positioniert sind,
- wenigstens einen Belag (24), der in einer Kammer untergebracht ist, die von jedem Halbkörper (16, 20) und der verbindbaren Bremsscheibe (8) begrenzt bzw. definiert wird, wobei der Belag (24) eine Halteplatte (28) und einen Reibungsabschnitt (32) umfasst, welcher der Bremsscheibe (8) direkt zugewandt ist,
- Antriebskomponenten (36), die fähig sind, den Belag (24) auf der Seite der Halteplatte (28) zu beeinflussen, um den Reibungsabschnitt (32) in einer axialen Richtung (X-X) gegen die Bremsscheibe (8) zu pressen,
- Haltemittel (40) für den Belag (24), die fähig sind, den Belag (24) zwischen dem jeweiligen Halbkörper (16, 20) und der Bremsscheibe (8) zu halten, um das Verschieben des Belags (24) unter der Schubwirkung der Antriebskomponenten (36) zuzulassen, wobei die Haltemittel (40) umfassen:
- wenigstens einen Stift (44), der über wenigstens einen Halbkörper (16, 20) in Richtung der Bremsscheibe (8) übersteht, wobei der Stift (44) einen Halteabschnitt (48) und einen Befestigungsabschnitt (52) hat, wobei der Halteabschnitt (48) fähig ist, mit einem Loch oder Schlitz (56) der Halteplatte (28) zusammenzuwirken, um den Belag (24) zu halten,
- den Sattel (4), der umfasst: wenigstens ein Halteloch (60) für den Stift (44), welcher in einer dem verbindbaren Belag (24) zugewandten ersten Zugangsöffnung (64) herauskommt, für das Einsetzen des Stifts (44) und wenigstens eine Schraube (68), die teilweise in das Halteloch (60) des Halbkörpers (16, 20) eingesetzt ist, wobei die Schraube (68) wenigstens teilweise in den Befestigungsabschnitt (52) des Stifts (44) eingreift, um den Stift (44) an dem Halbkörper (16, 20) zu befestigen,
**dadurch gekennzeichnet, dass**
der Befestigungsabschnitt (52) des Stifts (44) im Inneren des Haltelochs (60) des Halbkörpers (16, 20) untergebracht ist und der Halteabschnitt (48) seine Endposition an dem Halbkörper (16, 20) an der ersten Zugangsöffnung (64) des Haltelochs (60) auf der Seite des verbindbaren Belags (24) erreicht.

2. Sattel (4) nach Anspruch 1, wobei das Halteloch (60) des Halbkörpers (16, 20) durch den Halbkörper (16, 20) geht, um auf dem Halbkörper (16, 20) eine zweite Zugangsöffnung (72) getrennt von der ersten Zugangsöffnung (64) festzulegen, und das Einsetzen des Stifts (44) und der Schraube (68) jeweils durch die ersten und zweiten Zugangsöffnungen (64, 72) zuzulassen.

3. Sattel (4) nach Anspruch 1 oder 2, wobei das Halteloch (60) einen ersten und einen zweiten Abschnitt (76, 80) umfasst, die in den ersten und zweiten Zugangsöffnungen (64, 72) herauskommen, wobei die ersten und zweiten Abschnitte (76, 80) aufeinander treffen.

4. Sattel (4) nach Anspruch 3, wobei die ersten und zweiten Abschnitte (76, 80) parallel sind, um ein zylindrisches Halteloch (60) mit einer geradlinigen Achse zu bestimmen, um die Montage der Schraube (68) und des Stifts.(44) koaxial miteinander zu erlauben.

5. Sattel (4) nach Anspruch 3 oder 4, wobei die ersten und zweiten Abschnitte (76, 80) parallel zu der Axialrichtung (X-X) positioniert sind.

6. Sattel (4) nach Anspruch 3, wobei die ersten und zweiten Abschnitte (76, 80) orthogonal zueinander sind.

7. Sattel (4) nach einem der Ansprüche 2 bis 6, wobei das Halteloch (60) einen Absatz (84) an der zweiten Zugangsöffnung (72) hat, um das Einsetzen der Schraube (68) zu stoppen.

8. Sattel (4) nach Anspruch 7, wobei der Absatz (84) hergestellt wird, indem der jeweilige Halbkörper (16, 20) auf der zu dem verbindbaren Belag (24) gegenüberliegenden Seite abgeflacht wird.

9. Sattel (4) nach einem der vorhergehenden Ansprüche, wobei der Befestigungsabschnitt (52) des Stifts (44) einen Gewindesitz (88) umfasst, der auf der zu dem Halteabschnitt (48) entgegengesetzten Seite offen ist, um das Einsetzen und Schrauben der Schraube (68) im Inneren des Befestigungsabschnitts (52) zu erlauben.

10. Sattel (4) nach Anspruch 9, wobei der Gewindesitz (88) sich axial in dem Befestigungsabschnitt (52) erstreckt, ohne den Halteabschnitt (48), der einen massiven Querschnitt hat, zu unterbrechen.

11. Sattel (4) nach einem der vorhergehenden Ansprüche, wobei der Stift (44) an einem Übergangsabschnitt zwischen dem Befestigungsabschnitt (52) und dem Halteabschnitt (48) eine Manschette (92) umfasst, die fähig ist, ihre Endposition an dem Halbkörper (16, 20) bei der ersten Zugangsöffnung (64) zu erreichen, um einen Halt in der Einführung des Stifts (44) in das Halteloch (60) von der Seite der ersten Zugangsöffnung (64) zu bewirken.

12. Sattel (4) nach einem der vorhergehenden Ansprüche, wobei der Befestigungsabschnitt (52) Verdrehsicherungsmechanismen (96) für den Stift umfasst.

13. Sattel (4) nach Anspruch 12, wobei die Verdrehsicherungsmechanismen (96) auf einer äußeren Seitenwand des Befestigungsabschnitts (52) positioniert sind.

14. Sattel (4) nach Anspruch 12 oder 13, wobei die Verdrehsicherungsmechanismen (96) einen Rändelrand (100) umfassen.

15. Sattel (4) nach Anspruch 12, 13 oder 14, wobei die Verdrehsicherungsmechanismen (96) einen konischen Abschnitt (104) umfassen, der in Richtung des verbindbaren Belags (24) auseinanderläuft, wobei der konische Abschnitt (104) mit einer Manschette (92) des Halteabschnitts (48) des Stifts (44) verbunden ist, wobei die Manschette (92) an der ersten Zugangsöffnung (64) abschließt.

## Revendications

1. Etrier pour frein à disque (4) associable à un disque de frein (8), comprenant :
- un corps d'étrier (12) positionné à cheval sur ledit disque de frein (8), dans lequel le corps d'étrier (12) comprend un premier et un second demi-corps (16, 20) en regard l'un de l'autre et positionnés sur les côtés opposés du disque de frein (8),
- au moins une plaquette (24) logée dans un compartiment défini par chaque demi-corps (16, 20) et le disque de frein associable (8), la plaquette (24) comprenant une plaque de support (28) et une partie de frottement (32) directement en regard du disque de frein (8),
- des composants d'entraînement (36) pouvant influencer la plaquette (24) sur le côté de la plaque de support (28) afin de presser la partie de frottement (32) contre le disque de frein (8) dans une direction axiale (X-X),
- des moyens de support (40) pour la plaquette (24), à même de maintenir la plaquette (24) entre le demi-corps relatif (16, 20) et le disque de frein (8) et de permettre à la plaquette (24) de se décaler sous l'effet de poussée des composants d'entraînement (36), dans lequel lesdits moyens de support (40) comprennent :
- au moins une broche (44) dépassant d'au moins un demi-corps (16, 20) vers le disque de frein (8), la broche (44) ayant une partie de support (48) et une partie de fixation (52), la partie de support (48) étant à même de coopérer avec un trou ou une fente (56) de la plaque de support (28) pour supporter la plaquette (24),
- l'étrier (4) comprenant au moins un trou de support (60) pour la broche (44) qui sort d'une première ouverture d'accès (64) tournée vers la plaquette associable (24) pour l'insertion de la broche (44), et au moins une vis (68) insérée en partie dans ledit trou de support (60) du demi-corps (16, 20), dans lequel la vis (68) s'engage sur la partie de fixation (52) de la broche (44) au moins en partie pour fixer la broche (44) sur le demi-corps (16, 20),
**caractérisé en ce que**
la partie de fixation (52) de la broche (44) est logée à l'intérieur du trou de support (60) du demi-corps (16, 20) et la partie de support (48) atteint sa position finale contre le demi-corps (16, 20) au niveau de la première ouverture d'accès (64) du trou de support (60) du côté de la plaquette associable (24).

2. Etrier (4) selon la revendication 1, dans lequel ledit trou de support (60) du demi-corps (16, 20) traverse le demi-corps (16, 20) afin d'identifier sur le demi-corps (16, 20) une seconde ouverture d'accès (72), séparée de la première ouverture d'accès (64), et de permettre l'insertion de la broche (44) et de la vis (68) à travers les première et seconde ouvertures d'accès (64, 72), respectivement.

3. Etrier (4) selon la revendication 1 ou 2, dans lequel le trou de support (60) comprend une première et une seconde section (76, 80) qui ressortent desdites première et seconde ouvertures d'accès (64, 72), lesdites première et seconde sections (76, 80) étant incidentes l'une par rapport à l'autre.

4. Etrier (4) selon la revendication 3, dans lequel lesdites première et seconde sections (76, 80) sont parallèles afin d'identifier un trou de support cylindrique (60) ayant un axe rectiligne pour permettre le montage de la vis (68) et de la broche (44) coaxialement l'une par rapport à l'autre.

5. Etrier (4) selon la revendication 3 ou 4, dans lequel lesdites première et seconde sections (76, 80) sont positionnées parallèlement à la direction axiale (X-X).

6. Etrier (4) selon la revendication 3, dans lequel lesdites première et seconde sections (76, 80) sont orthogonales l'une à l'autre.

7. Etrier (4) selon l'une quelconque des revendications 2 à 6, dans lequel le trou de support (60) a une moulure (84) sur la seconde ouverture d'accès (72) afin d'arrêter l'insertion de ladite vis (68).

8. Etrier (4) selon la revendication 7, dans lequel ladite moulure (84) est fabriquée en aplatissant le demi-corps relatif (16, 20) du le côté opposé à la plaquette associable (24).

9. Etrier (4) selon l'une quelconque des revendications précédentes, dans lequel la partie de fixation (52) de la broche (44) comprend un siège taraudé (88) ouvert du côté opposé à la partie de support (48) afin de permettre l'insertion et le vissage de la vis (68) à l'intérieur de la partie de fixation (52).

10. Etrier (4) selon la revendication 9, dans lequel le siège taraudé (88) s'étend axialement dans la partie de fixation (52) sans intercepter la partie de support (48) qui a une coupe transversale pleine.

11. Etrier (4) selon l'une quelconque des revendications précédentes, dans lequel la broche (44), dans une partie de transition entre la partie de fixation (52) et la partie de support (48), comprend un collier (92) qui peut atteindre sa position finale contre le demi-corps (16, 20) dans la première ouverture d'accès (64), afin de provoquer un arrêt de l'insertion de la broche (44) dans le trou de support (60), depuis le côté de la première ouverture d'accès (64).

12. Etrier (4) selon l'une quelconque des revendications précédentes, dans lequel ladite partie de fixation (52) comprend des mécanismes anti-rotation (96) pour la broche (44).

13. Etrier (4) selon la revendication 12, dans lequel les mécanismes anti-rotation (96) sont positionnés sur une paroi latérale externe de la partie de fixation (52).

14. Etrier (4) selon la revendication 12 ou 13, dans lequel les mécanismes anti-rotation (96) comprennent une molette (100).

15. Etrier (4) selon la revendication 12, 13 ou 14, dans lequel les mécanismes anti-rotation (96) comprennent une section conique (104) divergeant vers la plaquette associable (24), ladite section conique (104) étant raccordée à un collier (92) de la partie de support (48) de la broche (44), le collier (92) se terminant contre la première ouverture d'accès (64).
